Europäisches Patentamt

European Patent Office

Office européen des brevets

(19)

(11) **EP 1 319 139 B1**

(12) **EUROPÄISCHE PATENTSCHRIFT**

(45) Veröffentlichungstag und Bekanntmachung des Hinweises auf die Patenterteilung:
**12.04.2006   Patentblatt 2006/15**

(21) Anmeldenummer: **01982118.0**

(22) Anmeldetag: **17.09.2001**

(51) Int Cl.:
*F16D 48/06* *(2006.01)*

(86) Internationale Anmeldenummer:
**PCT/DE2001/003573**

(87) Internationale Veröffentlichungsnummer:
**WO 2002/025131 (28.03.2002 Gazette 2002/12)**

(54) **VERFAHREN ZUM STEUERN EINER AUTOMATISCHEN KRAFTFAHRZEUGKUPPLUNG**

METHOD FOR CONTROLLING AN AUTOMATIC MOTOR VEHICLE CLUTCH

PROCEDE DE COMMANDE D'UN EMBRAYAGE AUTOMATIQUE DE VEHICULE

(84) Benannte Vertragsstaaten:
**DE FR**

(30) Priorität: **18.09.2000   DE 10046107**

(43) Veröffentlichungstag der Anmeldung:
**18.06.2003   Patentblatt 2003/25**

(73) Patentinhaber: **SIEMENS AKTIENGESELLSCHAFT**
**80333 München (DE)**

(72) Erfinder:
• **BAMBERGER, Joachim**
**82131 Stockdorf (DE)**
• **HORN, Joachim**
**80689 München (DE)**
• **MICHAU, Peter**
**93055 Regensburg (DE)**
• **NOCK, Ernst**
**88069 Tettnang (DE)**

(56) Entgegenhaltungen:
**WO-A-98/24008          US-A- 5 489 012**

EP 1 319 139 B1

**Beschreibung**

Die Erfindung betrifft ein Verfahren nach dem Oberbegriff von Anspruch 1. wie es z.B. aus US-A-5489012 bekannt ist. Eine solche Kraftfahrzeugkupplung weist ein Stellglied zum Betätigen der Kupplung und ein elektromagnetisch betätigtes Ventil auf, mit dessen Spulenstrom ein Volumenstrom gesteuert wird, der in dem Stellglied einen Druck aufbaut und damit die Position der Kupplung festlegt, indem aus einem Positionssollwert und dem Istwert der Position eine Regelabweichung ermittelt und daraus ein Regelsignal berechnet wird, mit dem die Kupplungsposition gesteuert wird.

Neben den herkömmlichen durch den Fahrer direkt betätigten Kraftfahrzeugkupplungen werden zunehmend automatisch betätigte Kupplungen in Kraftfahrzeugen eingesetzt (siehe zum Beispiel DE 44 34 111 A1, DE 38 31 449 A1). Da es sich bei der Regelung der Kupplungslage um eine nicht lineare Regelungsaufgabe handelt, müssen aufwendige Anpassungen durchgeführt werden, wenn ein geeigneter bekannter Regler, zum Beispiel ein PID-Regler, verwendet werden soll.

In der Praxis werden einerseits die Parameter für den P-, den I- und den D-Anteil eines PID-Reglers abhängig von der Differenz zwischen der Istgöße und der Führungsgröße der Kupplungsposition festgelegt. Der Zusammenhang zwischen den Reglerparametern und den Fehlerwerten andererseits wird in einem Kennfeld abgelegt. Dies hat folgende Nachteile.

Das Kennfeld enthält sowohl die Kompensation der Nichtlinearitäten als auch die Dynamik des Regelvorganges. Deshalb muss bei einer Änderung der Dynamikanforderung das komplette Kennfeld neu kalibriert werden. Außerdem werden durch den relativ großen P-Anteil des Reglers hohe Anforderungen an die Dynamik des Stellgliedes - hier ein Stromregler und ein elektromagnetisches Ventil - gestellt, die oft nicht erfüllt werden können.

Der Erfindung liegt die Aufgabe zugrunde, ein Verfahren zum Steuern einer automatisch betätigten Kraftfahrzeugkupplung zu schaffen, mit dem die Kupplungslagesteuerung verbessert wird, und das insbesondere die genannten Nachteile vermeidet.

Die Aufgabe der Erfindung wird durch ein Verfahren nach Anspruch 1 gelöst. Bei dem Verfahren wird dem Reglersignal ein aus einem Positionssollwert der Kupplung berechnetes Vorsteuersignal additiv hinzugefügt. Dadurch werden die beiden Charakteristika Nichtlinearität und Dynamik des Regelkreises entkoppelt.

Ein Vorteil der Erfindung liegt insbesondere darin, dass bei einer Änderung der Dynamikanforderung an den Regelkreis das zum Kompensieren der Nichtlinearitäten benutzte Vorsteuerglied des Regelalgorithmus unverändert bleiben kann. Dies vereinfacht den Kalibrationsaufwand für die Kupplungssteuerung und führt zu mehr Flexibilität bei veränderten Dynamikanforderungen, zum Beispiel hinsichtlich der Geschwindigkeit und der Minimierung von Überschwingern.

Zweckmäßige Weiterbildungen der Erfindung sind in den Unteransprüchen niedergelegt.

Ausführungsbeispiele der Erfindung werden im folgenden anhand der Zeichnungen erläutert. Es zeigen:

Figur 1    einen Kraftfahrzeugantrieb mit einer automatisch betätigten Kupplung, die nach dem erfindungsgemäßen Verfahren geregelt wird;

Figur 2    ein Blockschaltbild eines Kupplungsbetätigungssystems für den Kraftfahrzeugantrieb nach Figur 1;

Figur 3    eine modellhafte Darstellung des Kupplungsbetätigungssystems nach Figur 2;

Figur 4    die modellhafte Darstellung des Kupplungsbetätigungssystems nach Figur 3 mit einem zugehörigen Regelalgorithmus;

Figur 5    eine Regelstrecke des Kupplungsbetätigungssystems nach Figur 3;

Figur 6    der Hydraulikölfluss in der Kupplungsbetätigung als Funktion von elektrischem Steuerstrom und Druckdifferenz;

Figur 7    der elektrische Steuerstrom in der Kupplungsbetätigung als Funktion von Hydraulikölfluss und Druckdifferenz;

Figur 8    eine modellhafte Darstellung eines in dem Kupplungsbetätigungssystem nach Figur 2 verwendeten PID-Regelalgorithmus mit einem Antiwindup-Algorithmus;

Figur 9    eine schematische Darstellung der Berechnung eines Antiwindup-Signals;

Figur 10    der zeitliche Verlauf von Soll- und Istposition der Kupplung bei einer Kupplungslageregelung ohne Vorsteuerung;

Figur 11    der zeitliche Verlauf von Soll- und Istposition der Kupplung bei einer erfindungsgemäßen Kupplungslageregelung mit Vorsteuerung;

Figur 12    der zeitliche Verlauf der Stellgröße Spulenstrom bei einer Kupplungslageregelung ohne Vorsteuerung;

Figur 13    der zeitliche Verlauf der Stellgröße Spulenstrom bei einer erfindungsgemäßen Kupplungslageregelung mit Vorsteuerung, und

Figur 14    ein Ablaufdiagramm eines in dem Kupplungsbetätigungssystem nach Figur 2 abgearbeiteten Programms.

**EP 1 319 139 B1**

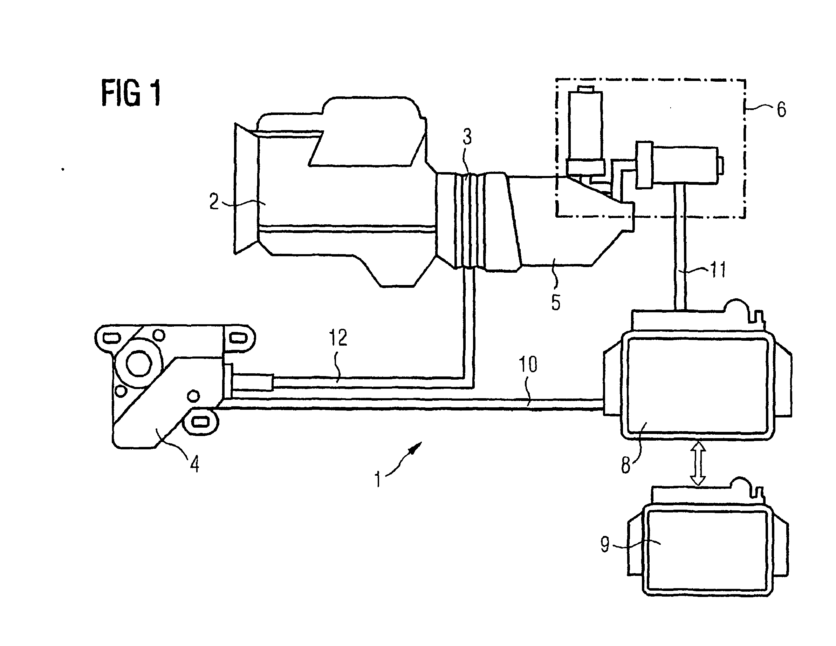

Ein Kraftfahrzeugantrieb 1 (Figur 1) weist - soweit er für die vorliegende Erfindung von Bedeutung ist - folgende Bestandteile auf: einen Motor 2, eine Kupplung 3, einen Kupplungsaktuator (im folgenden auch als Stellglied oder Stellantrieb für die Kupplung bezeichnet) 4, ein Schaltgetriebe 5, einen Getriebeaktuator 6, eine elektronische Steuerung 8 für das Stellglied 4 und den Getriebeaktuator 6 sowie eine Motorsteuerung 9. Die elektronische Steuerung 8 ist mit dem Stellglied 4 durch Steuer- und Signalleitungen 10 und mit dem Getriebeaktuator 6 durch Steuer- und Signalleitungen 11 verbunden.

Das Stellglied 4 kann als elektromotorisch angetriebener oder als hydraulisch angetriebener Aktuator ausgebildet sein. Im hier beschriebenen Ausführungsbeispiel wird ein hydraulisches Stellglied 4 verwendet, das mit der Kupplung 3 durch eine Kraftübertragungsanordnung 12 verbunden ist, die zum Beispiel als Druckleitung ausgebildet ist.

Bei dem Kraftfahrzeugantrieb 1 ist in dem vorliegenden Ausführungsbeispiel zwar das Schaltgetriebe 5 konstruktiv wie ein Handschaltgetriebe ausgebildet, die Schaltvorgänge werden aber automatisch durchgeführt und die Kupplung 3 wird - durch die elektronische Steuerung 8 gesteuert - betätigt, sobald die Steuerung einen Schaltvorgang einleitet. Ein solches Getriebe wird als automatisches (oder auch: automatisiertes) Handschaltgetriebe, abgekürzt ASG, bezeichnet. Die erfindungsgemäße Kupplungssteuerung kann auch mit automatisch gesteuerten Kupplungen (als EKS bezeichnet) für übliche Handschaltgetriebe verwendet werden, die betätigt werden, sobald der Fahrer an den Schalthebel greift, um einen Gangwechsel durchzuführen, oder aber mit vollautomatischen Schaltgetrieben, die allerdings in der Regel mit einer Nasskupplung oder einem Strömungswandler versehen sind.

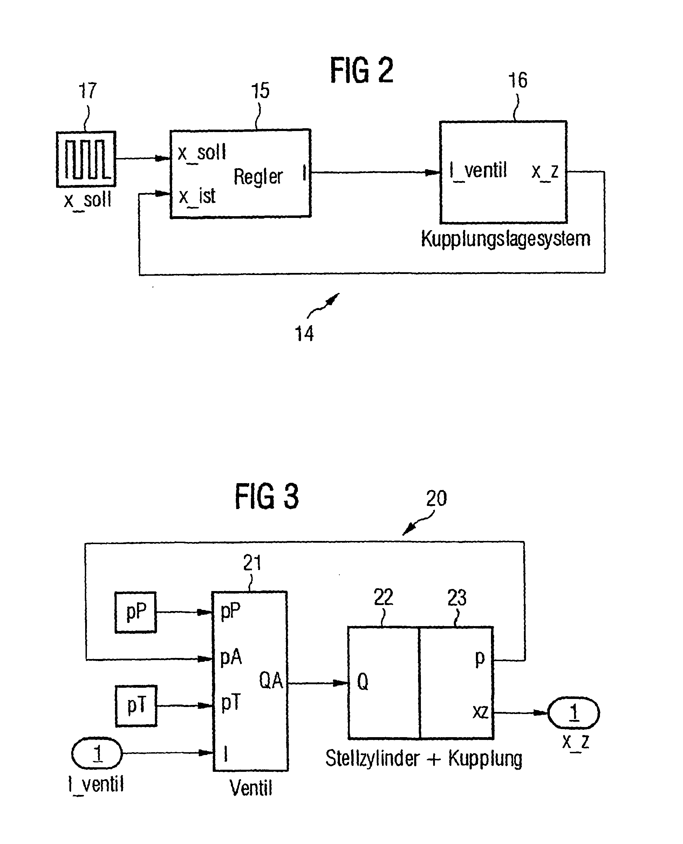

Das vereinfachte Blockschaltbild (Figur 2) eines nach dem erfindungsgemäßen Verfahren geregelten Kupplungsbetätigungssystems 14 zeigt einen Regler 15 und ein Kupplungslagesystem 16. Ein Sollwert x_soll für die Lage oder Position der Kupplung wird von einem Sollwertgeber 17, zum Beispiel in Form eines pulsweitenmodulierten Signals, an einen Eingang des Reglers 15 gelegt. An dessen anderen Eingang gelangt der Istwert x_ist der Kupplungslage. Der Regler 15 ermittelt daraus als Stellsignal einen Spulen- oder Magnetstrom I_ventil für ein elektromagnetisch gesteuertes hydraulisches Lagesteuerventil oder EVC 21 (siehe Figur 3) und übermittelt es an den Eingang des Kupplungslagesystems 16. Ausgangssignal des Kupplungslagesystems 16 ist die Position der Kupplung x_z, die als Istwert x_ist zu dem Regler rückgeführt wird.

Aus Figur 3 ist ein detaillierteres Streckenmodell 20, das heißt ein Modell des zu steuernden Kupplungslagesystems 16, ersichtlich. Ein hydraulisches Ventil 21 empfängt als Eingangsgrößen einen Systemdruck pP, einen Arbeitsdruck pA, einen Tankdruck pT und - über einen Signaleingang (1) - den Ventil- oder Spulenstrom I_ventil. Es steuert damit einen Volumenstrom Q, der in einem Stellzylinder 22 einen Druck aufbaut, welcher eine Kupplung 23 positioniert, das heißt in eine gewünschte Lage x_z verbringt, die der Istposition der Strecke entspricht. Der in dem Stellzylinder 22 der Kupplung 23 aufgebaute Druck p entspricht dem Arbeitsdruck pA, er wirkt auch auf das Ventil 21 zurück.

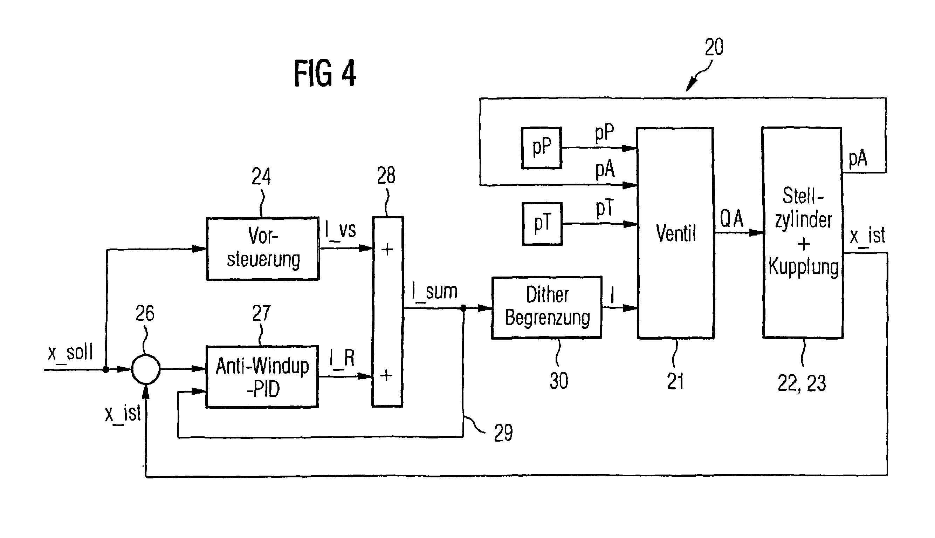

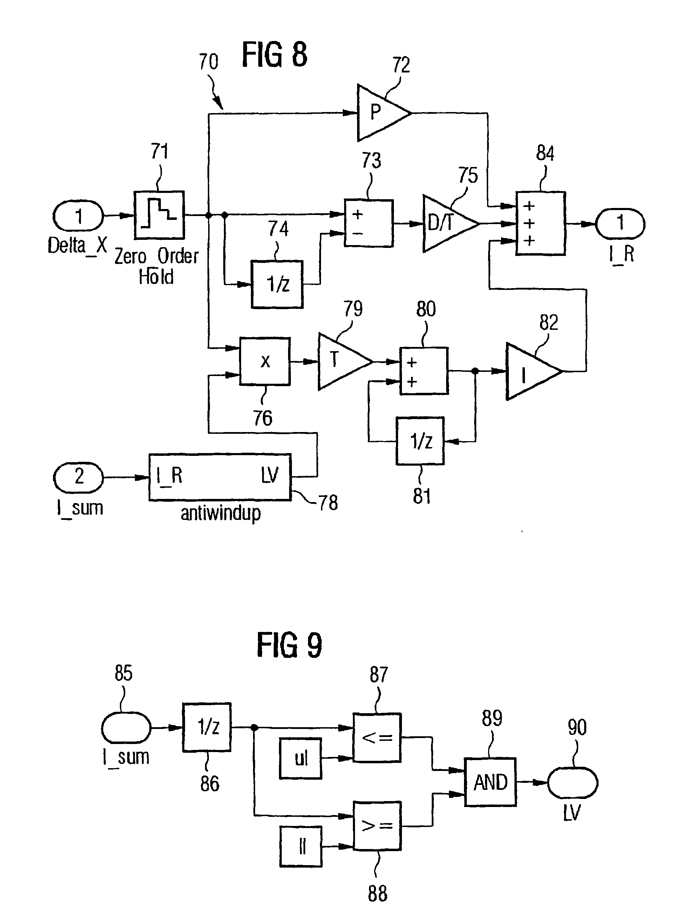

In Figur 4 ist zusätzlich zu dem Streckenmodell 20 die Struktur eines Regelalgorithmus für das Kupplungsbetätigungssystem 14 dargestellt. In einer Vorsteuerung 24 wird aus dem Sollwert x_soll für die Kupplungslage ein Vorsteuersignal I_vs berechnet. In einem Subtrahierglied 26 wird aus dem Sollwert x_soll und dem Istwert x_ist der Kupplungslage die Regelabweichung Delta_x bestimmt und daraus in einem Antiwindup-PID-Regler 27 ein Regelsignal I_R berechnet. Dieser Regler 27 ist ein PID-Regler, der mit einem anhand von Figur 8 noch zu beschreibenden besonderen Algorithmus störende Regler-Windup-effekte [siehe S. Engell (Hrsg.) Entwurf nichtlinearer Regelungen, Verlag Oldenbourg, 1995, Seiten 239-262] ausschaltet. Er führt eine PID-Regelung mit einer definierten Rücksetzung des Integrators durch. (Ein derartiger Regler wird in der Betriebspraxis auch als "Enhanced PID-Regler" bezeichnet.)

Die Ausgangssignale der Vorsteuerung 24 und des Antiwindup-PID-Reglers 27 werden in einem Addierglied 28 addiert. Die Signalsumme I_vs plus I_R wird über eine Leitung 29 an einen zweiten Eingang des Antiwindup-PID-Reglers 27 rückgeführt und es wird ihr in einem Block 30 ein Dither-Signal hinzugefügt, um Magnethysterese und Reibungseffekte im Ventil zu reduzieren. Außerdem wird die Signalamplitude beidseitig begrenzt und eine durch die Funktionsauswertung verursachte Totzeit dargestellt. An dem Signalausgang des Blocks 30 wird ein das Stellsignal für das Ventil 21 darstellender Strom I ausgegeben.

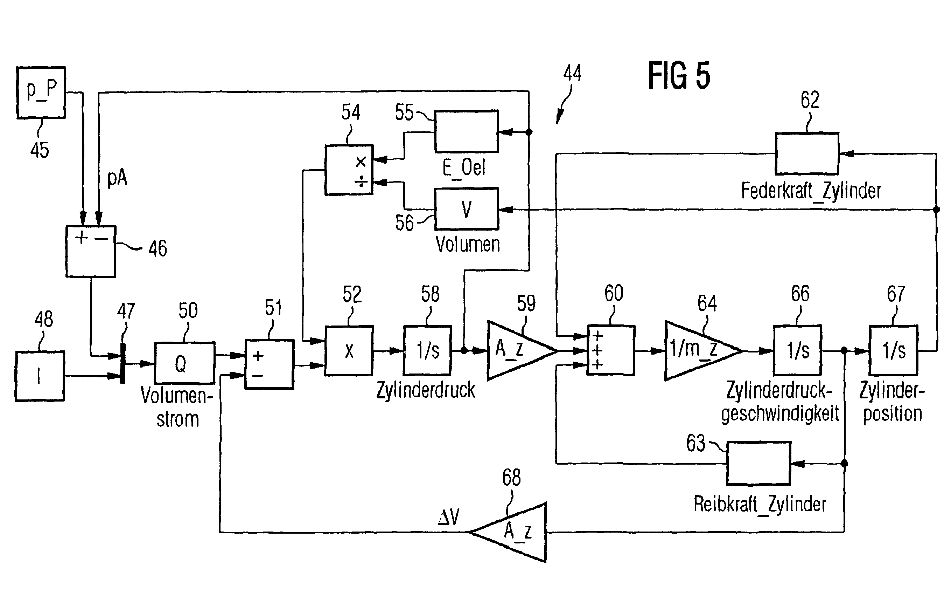

Das Streckenmodell 44 des Kupplungsbetätigungssystems ist in Figur 5 bei geöffnetem Steuerdurchlass P-A dargestellt. Es weist folgende Blöcke auf: einen Eingang 45, an dem der Systemdruck p_P anliegt (Anmerkung: die Größen pP, $p_P$ und p_P usw. sind gleichbedeutend, die unterschiedliche Schreibweise beruht auf unterschiedlichen Notationen in verschiedenen verwendeten Programmen) Von dort gelangt p_P zu dem Pluseingang eines Addierers 46, an dessen Minuseingang der Zylinder- oder Arbeitsdruck pA anliegt. Sein Ausgangssignal wird in einem Multiplexer 47 mit dem Spulenstrom I, der an einem Eingang 48 anliegt, zu einem Vektorsignal zusammengefasst.

Der Ausgang des Multiplexers 47 ist mit einem Block 50 verbunden, der den Volumenstrom Q berechnet und ihn auf den Pluseingang eines Addierers 51 mit einem negiertem Eingang gibt. Auf dessen negierten oder Minuseingang wird eine Volumenänderung ΔV gegeben, und die sich ergebende Differenz wird in einem Multiplizierer 52 mit dem Ausgangssignal eines Dividiergliedes 54 multipliziert. Auf den Zählereingang des Dividierers 54 gelangt der Elastizitätsmodul E_Oel der Gesamtanordnung, einschließlich des Hydrauliköls, der in einem Block 55 abhängig von dem Zylinderdruck ermittelt wird. An den Nennereingang des Dividiergliedes 54 wird das in einem Block 56 abhängig von der Zylinderposition ermittelte Volumen V des hydraulischen Kupplungsbetätigungssystems einschließlich des Stellzylinders 22 gelegt.

In einem Integrierglied 58 wird aus dem Ausgangssignal des Multiplizierers 52 der Zylinderdruck berechnet und an den Minuseingang des Addierers 46, an den Eingang von Block 55 sowie an den Eingang eines als Multiplizierer dienenden Verstärkers 59 gelegt. In diesem wird er mit der wirksamen Zylinderfläche A multipliziert. Das Ergebnis gelangt an einen Eingang eines Addierers 60, an dessen zweiten Eingang die auf den Stellzylinder einwirkende Federkraft des Zylinders F_feder gelangt, die in einem Block 62 aus der Zylinderposition berechnet wird. An einen dritten Eingang des Addierers 60 wird die in dem Stellzylinder auftretende Reibkraft des Zylinders F_reib gelegt, die in einem Block 63 ermittelt wird.

Das Ausgangssignal des Addierers 60 gelangt zu einem Verstärker 64, und wird dort durch die bewegte Masse m_z dividiert. In einem Integrierglied 66 wird das Ergebnis der Division integriert und damit die Zylindergeschwindigkeit berechnet. Durch nochmalige Integration in einem Integrierglied 67 wird die Zylinderposition berechnet und auf den Eingang des Blocks 62 und des Blocks 56 gelegt. Die Zylindergeschwindigkeit wird einerseits auf den Eingang des Blocks 63 und andererseits auf den Eingang eines Verstärkers 68 gelegt, in dem sie mit der wirksamen Zylinderfläche A_z multipliziert wird. Das Ergebnis der Multiplikation ist eine Volumenänderung $\Delta$V im Zylinder, die auf einen Minuseingang des Addierers 51 gelegt wird.

Die Strecke 44 (Figur 5) der Kupplungsbetätigung lässt sich durch folgende drei Differentialgleichungen beschreiben:

$$\dot{x}_z = v_z \qquad\qquad\qquad (\mathrm{I})$$

$$\dot{v}_z = \frac{1}{m_z}\left(F^z_{Feder}(x_z) + A_z p + F^z_{Reib}(v)\right) \qquad\qquad (\mathrm{II})$$

$$\dot{p} = \frac{E_{\ddot{O}l}(p)}{V(x_z)}\left(Q(\Delta p, x_v) - A_z v_z\right) \qquad\qquad (\mathrm{III})$$

Darin sind:

$x_z$ die Position der Kupplung oder des Stellzylinders
$v_z$ die Geschwindigkeit der Kupplung oder des Stellzylinders
$m_z$ die bewegte Masse
$A_z$ die wirksame Fläche des Stellzylinders
$p, \dot{p}$ der Druck im Stellzylinder und dessen Ableitung
$E_{\ddot{o}l}$ den druckabhängigen Elastizitätsmodul der Gesamtanordnung
V das Volumen der Gesamtanordnung
Q der Volumenstrom von Hydraulikflüssigkeit
$x_v$ die Position des Ventilschiebers und
$\Delta_p$ eine Druckdifferenz, die gegeben ist durch:

$$\Delta p = \begin{cases} p_P - p & \text{bei geöffnetem Steuerdurchlass P-A} \\ \\ p - p_T & \text{bei geöffnetem Steuerdurchlass A-T ,} \end{cases} \qquad (\mathrm{IV})$$

wobei A für einen Arbeitsdruckanschluss, P für einen Systemdruckanschluss und T für den Druck an einem (Vorrats-) Tankanschluss stehen.

Der Volumenstrom $Q$ ist eine Funktion dieser Druckdifferenz und der Ventilschieberposition $x_v$.

Die Ventilschieberposition $x_v$ und die Ventilschiebergeschwindigkeit $v_v$ berechnen sich wie folgt

$$\dot{x}_v = v_v \qquad\qquad (V)$$

$$\dot{v}_v = \frac{1}{m_v}(F_{Magnet}(I,x_v) + F_{Feder}^v(x_v) + F_{Str}(\Delta p,Q,x_v) + F_{Reib}^v(v_v)) \qquad (VI)$$

Für die tatsächliche Steuerung des Kupplungslagesystems wird das vereinfachte Streckenmodell 44 (Figur 5) verwendet. Dabei wird die hochfrequente Dynamik des Ventilschiebers vernachlässigt und die Ventilschieberposition durch eine algebraische Gleichung der Form

$$x_v^s = x_v^s(I,\Delta p,Q) \qquad\qquad (VII)$$

anstelle der Differentialgleichungen (V), (VI) beschrieben. Damit ergibt sich der Volumenstrom $Q$ als Funktion des Spulenstroms I und des Differenzdrucks $\Delta p$:

$$Q = Q_s(I,\Delta P) \qquad\qquad (VIII)$$

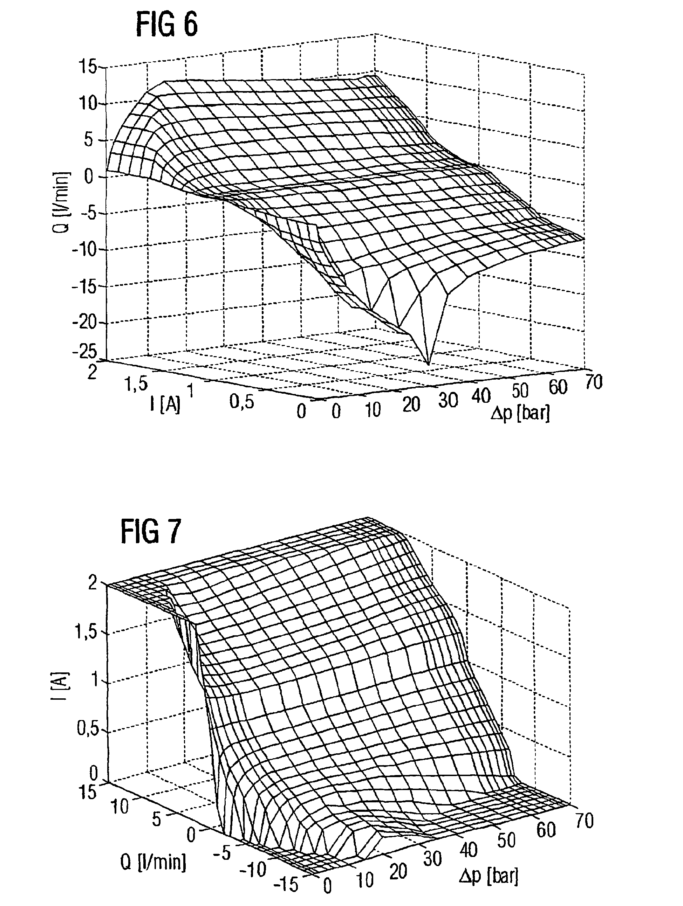

Diese Funktion, die den stationären Durchfluss Q in Abhängigkeit der beiden Größen $I$ und $\Delta p$ darstellt, wird numerisch ermittelt. Sie ist aus Figur 6 ersichtlich.

Es ergeben sich somit folgende Differentialgleichungen:

$$\dot{x}_z = v_z \qquad\qquad (IX)$$

$$\dot{v}_z = \frac{1}{m_z}(F_{Feder}^z(x_z) + A_z p + F_{Reib}^z(v_z)) \qquad\qquad (X)$$

$$\dot{p} = \frac{E_{Ol}(p)}{V(x_z)}(Q_s(I,\Delta p) - A_z v_z) \qquad\qquad (XI)$$

Eine Berechnung der einzelnen Blöcke von Figur 5 erfolgt in einem Ausführungsbeispiel gemäß nachstehender Gesetzmäßigkeiten.

Befindet sich der Stellzylinder am Anschlag, so gelten folgende Differentialgleichungen:

$$\dot{x}_z = 0 \qquad\qquad (VIIIa)$$

$$\dot{v}_z = 0 \qquad\qquad\qquad \text{(IXa)}$$

$$\dot{p} = \frac{E_{Ol}(p)}{V(x_z)} Q_s(I, \Delta p) \qquad\qquad \text{(Xa)}$$

Die Kupplungslage wird, da die Strecke nichtlinear ist, nichtlinear wie folgt gesteuert. Um die Schreibweise zu vereinfachen werden die Indizes $z$ (für Zylinder) und $Öl$ im folgenden weg gelassen. Man erhält die Darstellung

$$\dot{x} = v \qquad\qquad\qquad \text{(XI)}$$

$$\dot{v} = \frac{1}{m}(F_{Feder}(x) + Ap + F_{Reib}(v)) \qquad\qquad \text{(XII)}$$

$$\dot{p} = \frac{E(p)}{V(x)}(Q_s(I, \Delta p) - Av) \qquad\qquad \text{(XIII)}$$

worin $F_{Feder}$ die Federkraft und $F_{Reih}$ die Reibkraft im Kupplungssystem sind.
Mit $y=x$ erhält man die Zustandsgrößen

$$x = y \qquad\qquad\qquad \text{(XIV)}$$

$$v = \dot{y} \qquad\qquad\qquad \text{(XV)}$$

$$p = \frac{1}{A}(m\ddot{y} - F_{Feder}(y) - F_{Reib}(\dot{y})) \qquad\qquad \text{(XVI)}$$

Da der Volumenstrom $Q=Q_s(I, \Delta p)$ eine bezüglich $I$ im interessierenden Definitionsbereich monoton steigende Funktion ist, existiert eine inverse Funktion $I = Q_s^{-1}(Q, \Delta p)$. Diese Funktion ist aus Figur 7 ersichtlich.
Die Eingangsgröße $I$ lässt sich als Funktion der Ausgangsgröße $y$ und deren zeitlichen Ableitungen darstellen

$$I = I(y, \dot{y}, \ddot{y}, \dddot{y}) \qquad\qquad \text{(XVII)}$$

gemäß

$$I = Q_s^{-1}(Q_F, \Delta p) \qquad\qquad (\mathrm{XVIII})$$

mit

$$Q_F = \frac{1}{A} \frac{V(y)}{E(\frac{1}{A}(m\ddot{y} - F_{Feder}(y) - F_{Reib}(\dot{y})))}(m\ddot{y} - \frac{\partial F_{Feder}(y)}{\partial y}\dot{y} - \frac{\partial F_{Reib}(\dot{y})}{\partial \dot{y}}\ddot{y}) + A\dot{y} \qquad (\mathrm{XIX})$$

und

$$\Delta p = p_P - \frac{1}{A}(m\ddot{y} - F_{Feder}(y) - F_{Reib}(\dot{y})) \quad \text{für} \quad Q_F \geq 0 \qquad\qquad (\mathrm{XXa})$$

sowie

$$\Delta p = \frac{1}{A}(m\ddot{y} - F_{Feder}(y) - F_{Reib}(\dot{y})) - p_T \quad \text{für} \quad Q_F < 0 \qquad\qquad (\mathrm{XXb})$$

Dieses Ergebnis wird für eine nichtlineare Steuerung der Kupplungsbetätigung mit einem Sollstrom $I_d$ verwendet:

$$I_d = I(y_d, \dot{y}_d, \ddot{y}_d, \dddot{y}_d) \qquad\qquad (\mathrm{XXI})$$

Um den Steueralgorithmus zu vereinfachen, können auch höhere Ableitungen in dieser Gleichung vernachlässigt werden, zum Beispiel wie folgt

$$I_d = I(y_d, \dot{y}_d, 0, 0) \qquad\qquad (\mathrm{XXII})$$

Wegen der Instabilität der Strecke kann die Kupplungslage nicht allein mir der beschriebenen Vorsteuerung eingestellt werden, es ist wie bereits erwähnt zusätzlich ein Regelungsanteil erforderlich. Dieser wird von dem Antiwindup-PID-Regler 27 geliefert, bei dem es sich vorliegend um einen PID-Regler handelt, der mit einem besonderen Algorithmus störende Regler-Windup-Effekte ausschaltet.

Dieser Algorithmus wird im Folgenden als Antiwindup-Algorithmus bezeichnet, der durch eine aus Figur 8 ersichtliche Regelalgorithmus 70, der durch eine Rechenschaltung oder durch ein Programm realisiert wird. An einem ersten Eingang (1) liegt die Regelabweichung Delta_x an und wird in einem Abtasthalteglied 71 digitalisiert. Dessen Ausgangssignal wird erstens in einem Verstärker 72 mit einem Faktor P, dem Verstärkungsfaktor für den P-Anteil, multipliziert. Zweitens wird sie dem nicht invertierendem eines Addierers 73 direkt und dessen invertierendem Eingang über ein Zeitverzögerungsglied 74 zugeführt, der eine Zeitverschiebung um eine Abtastzeit bewirkt. Das Ausgangssignal des Addierers 73 wird in einem Verstärker 75 mit dem Faktor D/T multipliziert, wobei D der Verstärkungsfaktor für den D-Anteil und T die Abtastzeit ist. Drittens wird das Ausgangssignal auf einen Eingang eines Multiplizierers 76 gelegt.

An einem zweiten Eingang (2) liegt ein Strom I_sum an, der zu einer Antiwindup-Schaltung 78 geführt wird, die an ihrem Ausgang ein Steuersignal LV erzeugt. Der logische Wert des Signals ist LV=1, wenn die Antiwindup-Funktion nicht aktiv ist, und LV=0, wenn die Antiwindup-Funktion aktiv ist. Das aktive Steuersignal LV hält den Integrator des PID-Reglers an, das heißt es setzt seinen Eingang des auf null, wenn Stellgrößenbeschränkungen in dem Spulenstrom I wirksam sind, die als maximale und minimale Spulenströme durch die Ventilmagnete und zugehörigen Steuerschaltungen vorgegeben sind.

Das Steuersignal LV gelangt zu dem zweiten Eingang des Multiplizierers 76 und wird dort mit dem Ausgangssignal des Abtasthalteglieds 71 multipliziert. Das Ergebnis wird in einem Verstärker 79 mit der Abtastzeit T multipliziert und dann einem Eingang eines Addierers 80 zugeführt. Dessen Ausgangssignal wird auf seinen zweiten Eingang über ein Zeitverzögerungsglied 81 rückgekoppelt. Sein Ausgangssignal wird in einem Verstärker 82 mit dem Verstärkungsfaktor I für den Integralanteil multipliziert oder verstärkt.

Die Ausgangssignale der drei Verstärker 72, 75 und 82 gelangen auf die Eingänge eines Addierers 84 und dessen Ausgangssignal ergibt den Spulenstrom I_R als Stellsignal zum Regeln der Kupplungslage dar.

Ein Ausführungsbeispiel für die Berechnung des Antiwindup-Signals LV in der Antiwindup-Schaltung 78 ist aus Figur 9 ersichtlich. Das Stellsignal Spulenstrom I_sum gelangt über einen weiteren Eingang 85 zu einem Zeitverzögerungsglied 86, und dessen Ausgangssignal wird in einer ersten Vergleichsschaltung 87 mit einem oberen Grenzwert uL und in einer zweiten Vergleichsschaltung 88 mit einem unterem Grenzwert 1L verglichen. Die Ausgangssignale der beiden Vergleichsschaltungen werden in einem UND-Glied 89 verknüpft und ergeben das an einem Ausgang 90 anliegende Steuersignal LV.

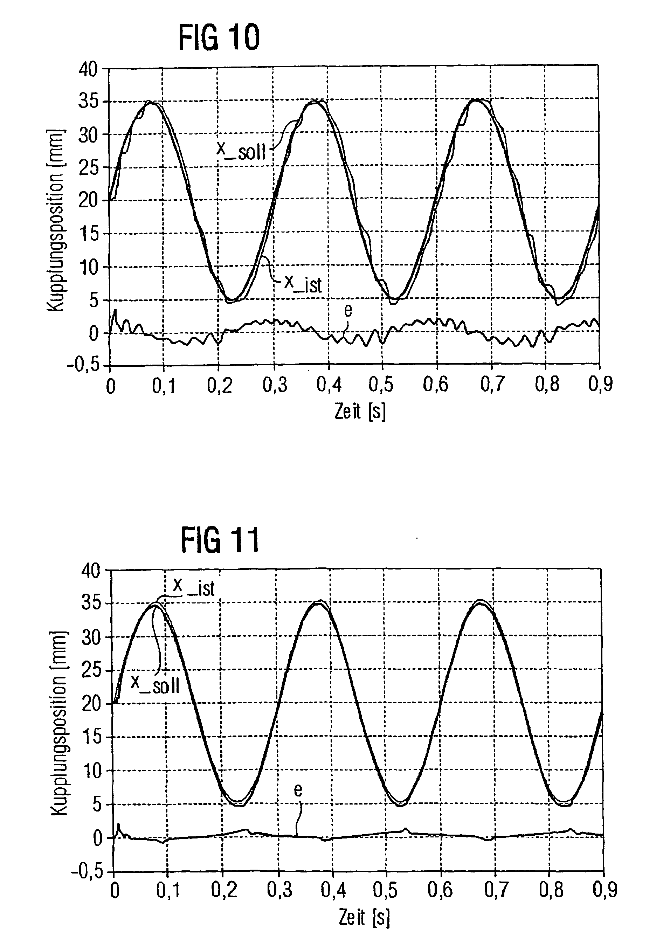

Bei der Darstellung der Regelergebnisse in den Figuren 10 bis 13 ist das Dithersignal abgeschaltet worden, um die Regelabweichung besser erkennen und beurteilen zu können. Aus Figur 10 ist der Verlauf des Sollwerts x_soll und des Istwerts x_ist der Kupplungsposition sowie der Regelfehler e bei einer Regelung ohne Vorsteuerungsanteil ersichtlich. Der Sollverlauf ist sinusförmig mit einer Periodendauer von 0,3 Sekunden. Bei dem Regelfehler e = x_soll - x_ist beträgt die maximale Abweichung etwa ± 2,5 mm.

Aus Figur 11 ist der Verlauf des Sollwerts x_soll und des Istwerts x_ist der Kupplungsposition sowie der Regelfehler e bei einer erfindungsgemäßen Regelung mit Vorsteuerungsanteil ersichtlich. Die Abweichungen sind deutlich kleiner als bei der Regelung ohne Vorsteuerung. Der P-Parameter des Reglers kann hier verringert und damit die Schwingneigung der Kupplungslageregelung reduziert werden. Der in Figur 10 sichtbare hochfrequente Anteil des Regelfehlers tritt in Figur 11 nicht auf. Bei der Regelung ohne Vorsteuerung hingegen ist ein hoher Wert des P-Parameters notwendig, da der Regler das Stellsignal aus einer möglichst kleinen Regelabweichung erzeugen soll.

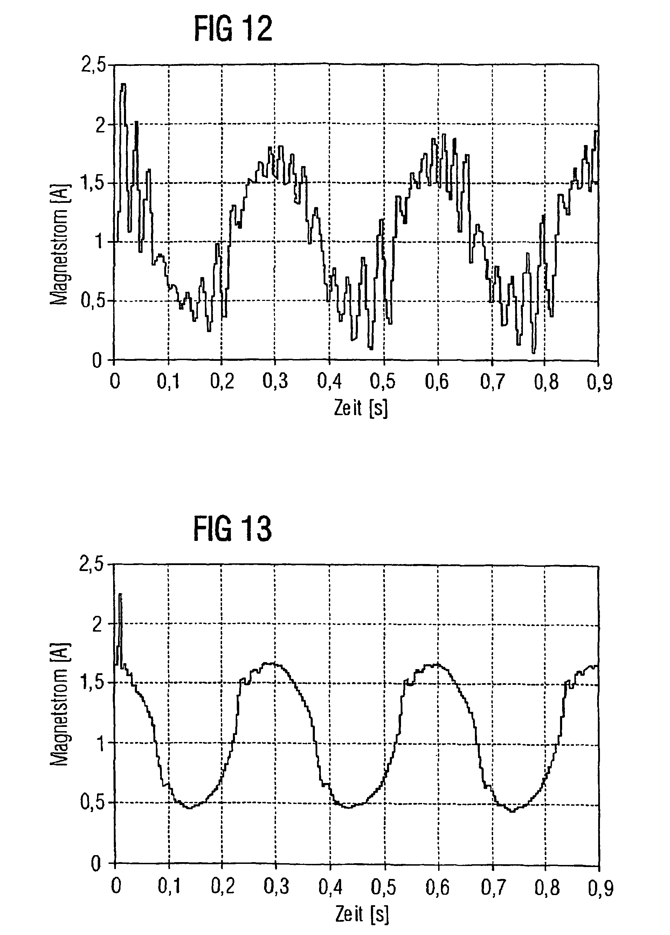

Aus Figur 12 ist die Stellgröße Spulen- oder Magnetstrom bei einer Regelung ohne Vorsteuerungsanteil ersichtlich.

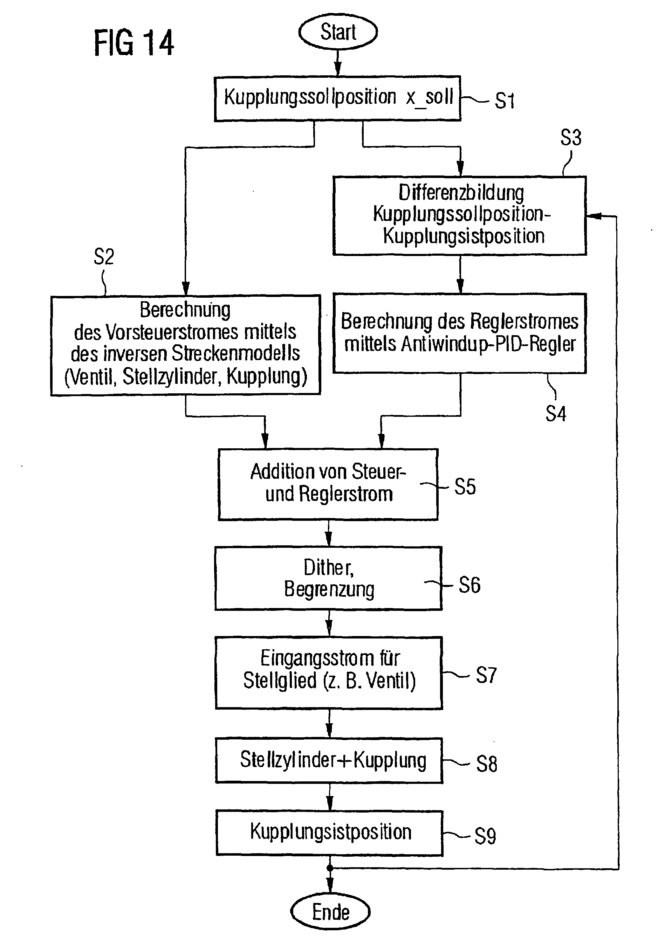

Aus Figur 13 ist die Stellgröße Spulen- oder Magnetstrom bei einer erfindungsgemäßen Regelung mit Vorsteuerungsanteil ersichtlich. Wegen des kleinen P-Anteils im Regler treten wesentlich weniger hochfrequente Anteile auf, die Regelung ist erheblich wirksamer.

Ein aus Figur 14 ersichtliches Ablaufdiagramm eines in dem Kupplungsbetätigungssystem 14 (Figur 2) abgearbeiteten Programms weist folgende Schritte auf.

**Start:** Sobald von der elektronischen Steuerung 8 (Figur 1) ein Schaltvorgang eingeleitet wird, wird in einem Schritt

**S1**: eine Kupplungssollposition vorgegeben. Dann wird einerseits in einem Schritt

**S2**: ein Vorsteuerstrom wird mit einem inversen Streckenmodell, das das Hydraulik-Ventil, den Stellzylinder und die Kupplung einschließt, berechnet. Andererseits wird in einem Schritt

**S3**: die Differenz zwischen der Kupplungssollposition und der Kupplungsistposition gebildet, und in einem Schritt

**S4**: wird der Reglerstrom mit dem Antiwindup-PID-Regler berechnet. Sowohl nach dem Schritt S4 als auch nach dem Schritt S2 werden in einem Schritt

**S5**: der Steuerstrom und der Reglerstrom addiert. In einem Schritt

**S6**: wird auf das Summensignal ein Dither-Signal aufgeschaltet und eine Signalbegrenzung durchgeführt. In einem Schritt

**S7**: wird der Eingangsstrom für das Stellglied (Ventil) berechnet. Danach werden in

**S8**: der Stellzylinder und die Kupplung betätigt. Schließlich wird in

**S9**: die Kupplungsistposition ermittelt. Anschließend erfolgt ein Rücksprung zu den Schritten S2 und S3. Das Programm wird zyklisch wiederholt (zum Beispiel alle 4 ms. Eine Kupplungsbetätigung ist etwa nach 30 ms beendet.) Es folgt das

**Ende.**

**EP 1 319 139 B1**

**Patentansprüche**

1. Verfahren zum Steuern einer automatischen Kraftfahrzeugkupplung (23) mit einem hydraulischen Stellglied (4) zum Betätigen der Kupplung und einem elektromagnetisch betätigten Ventil (17), mit dessen Spulenstrom ein Volumenstrom (Q) gesteuert wird, der in dem Stellglied einen Druck aufbaut und damit die Position (x_z) der Kupplung festlegt, indem aus einem Positionssollwert und dem Istwert der Position eine Regelabweichung (Delta_x) ermittelt und daraus ein Regelsignal berechnet wird, mit dem die Kupplungsposition gesteuert wird, **dadurch gekennzeichnet, dass** dem Regelsignal ein aus einem Positionssollwert der Kupplung berechnetes Vorsteuersignal (I_vs), mit dem Nichtlinearitäten der Regelung kompensiert werden, additiv hinzugefügt wird.

2. Verfahren nach Anspruch 1, **dadurch gekennzeichnet, dass** eine PID-Regelung mit einer definierten Rücksetzung des Integrators durchgeführt wird.

3. Verfahren nach Anspruch 1 oder 2, **dadurch gekennzeichnet,**

   - **dass** ein Vorsteuerstrom mit einem inversen Streckenmodell berechnet wird,
   - **dass** aus der Regelabweichung mit einem Antiwindup-Algorithmus ein Regelstrom ($I_R$) berechnet wird,
   - **dass** der Vorsteuerstrom ($I_{vs}$) und der Regelstrom ($I_R$) summiert werden, und
   - **dass** die Summe dieser Signale zum Einstellen der Kupplungsposition verwendet wird.

4. Verfahren nach Anspruch 3, **dadurch gekennzeichnet, dass** zu der Summe des Vorsteuerstroms ($I_{vs}$) und des Regelstroms ($I_R$) ein Dithersignal addiert wird, mit dem die Magnethysterese und Reibungseffekte in dem Ventil (17) reduziert werden.

5. Verfahren nach Anspruch 3, **dadurch gekennzeichnet, dass** die Signalamplitude des als Summe des Vorsteuerstroms und des Regelstromes gebildeten Signals mit einer Begrenzerschaltung beidseitig begrenzt wird.

6. Verfahren nach Anspruch 3, **dadurch gekennzeichnet, dass** zu dem als Summe des Vorsteuerstroms und des Regelstromes gebildeten Signals eine durch die Funktionsauswertung verursachte Totzeit nachgebildet wird.

**Claims**

1. Method for controlling an automatic motor vehicle clutch (23) with a hydraulic control element (4) to activate the clutch and an electromagnetically activated valve (17), the coil current of which controls a bulk current (Q), which builds up a pressure in the control element and thereby defines the position (x_z) of the clutch, in that a system deviation (Delta_x) is determined from a target position value and the actual position value, from which a regulating signal is calculated, which is used to control the clutch position, **characterised in that** a pre-control signal (I_vs), calculated from a target position value of the clutch and compensating for regulation non-linearities, is added in an additive manner to the regulating signal.

2. Method according to claim 1, **characterised in that** PID regulation is implemented with a defined resetting of the integrator.

3. Method according to claim 1 or 2, **characterised in that**

   - a pre-control current is calculated with an inverse section model,
   - a regulating current ($I_R$) is calculated from the system deviation with an anti-windup algorithm,
   - the pre-control current ($I_{VS}$) and the regulating current ($I_R$) are summed and
   - the sum of these signals is used to adjust the clutch position.

4. Method according to claim 3, **characterised in that** a dither signal is added to the sum of the pre-control current ($I_{VS}$) and the regulating current ($I_R$), to reduce the magnetic hysteresis and friction effects in the valve (17).

5. Method according to claim 3, **characterised in that** the signal amplitude of the signal formed as the sum of the pre-control current and the regulating current is limited on both sides with a limiter circuit.

6. Method according to claim 3, **characterised in that** a dead time caused by the function evaluation is simulated for

9

the signal formed as the sum of the pre-control current and the regulating current.

**Revendications**

1. Procédé pour commander un embrayage automatique de véhicule automobile (23) comprenant un organe de réglage hydraulique (4) destiné à actionner l'embrayage et une soupape (17) actionnée par voie électromagnétique, avec le courant de bobine de laquelle est commandé un débit volumique (Q) qui établit une pression dans l'organe de réglage et fixe par ce moyen la position (x_z) de l'embrayage, dans lequel à partir d'une valeur de consigne de la position et de la valeur réelle de la position, un écart de régulation (Delta_x) est obtenu et que, sur cette base, est calculé un signal de régulation avec lequel la position de l'embrayage est commandée, **caractérisé en ce qu'**au signal de régulation, est ajouté dans le mode additif un signal de commande pilote (I_vs) calculé à partir d'une position de consigne de l'embrayage, et avec lequel les non linéarités de la régulation sont compensées.

2. Procédé selon la revendication 1, **caractérisé en ce qu'**une régulation PID est exécutée avec une remise à zéro définie de l'intégrateur.

3. Procédé selon la revendication 1 ou 2, **caractérisé**

   - **en ce qu'**un courant de commande pilote est calculé avec un modèle de système inverse,
   - **en ce qu'**un courant de régulation ($I_R$) est calculé à partir de l'écart de régulation avec un algorithme Antiwindup,
   - **en ce que** le courant de commande pilote ($I_{VS}$) et le courant de régulation ($I_R$) sont additionnés, et
   - **en ce que** la somme de ces signaux est utilisée pour le réglage de la position de l'embrayage.

4. Procédé selon la revendication 3, **caractérisé en ce qu'**à la somme du courant de commande pilote (IVS) et du courant de régulation (IR), est ajouté un signal d'hésitation avec lequel l'hystérésis magnétique et les effets de frottement dans la soupape (17) sont réduits.

5. Procédé selon la revendication 3, **caractérisé en ce que** l'amplitude du signal formé de la somme du courant de commande pilote et du courant de régulation est limitée des deux côtés au moyen d'un circuit limiteur.

6. Procédé selon la revendication 3, **caractérisé en ce que** le signal formé de la somme du courant de commande pilote et du courant de régulation, est simulé par un temps mort provoqué par l'analyse de la fonction.

FIG 1

EP 1 319 139 B1

# FIG 2

17

15

16

x_soll

x_soll

Regler | I

x_ist

l_ventil x_z

Kupplungslagesystem

14

# FIG 3

20

21

pP

pP

pA

22 23

QA

Q

p

pT

pT

xz

1

I

l_ventil

Ventil

Stellzylinder + Kupplung

1

x_z

# FIG 4

EP 1 319 139 B1

FIG 5

**FIG 6**

**FIG 7**

# FIG 8

# FIG 9

## FIG 10

## FIG 11

## FIG 12

## FIG 13

**FIG 14**

Start

Kupplungssollposition x_soll — S1

Differenzbildung
Kupplungssollposition-
Kupplungsistposition — S3

Berechnung
des Vorsteuerstromes mittels
des inversen Streckenmodells
(Ventil, Stellzylinder, Kupplung) — S2

Berechnung des Reglerstromes
mittels Antiwindup-PID-Regler — S4

Addition von Steuer-
und Reglerstrom — S5

Dither,
Begrenzung — S6

Eingangsstrom für
Stellglied (z. B. Ventil) — S7

Stellzylinder+Kupplung — S8

Kupplungsistposition — S9

Ende